# EUROPEAN PATENT APPLICATION

(11) **EP 2 636 960 A2**
(43) Date of publication of application: **11.09.2013**
(21) Application number: 13158013.6
(22) Date of filing: 06.03.2013
(51) Int. Cl.: F24D 19/10

(54) **Heat pump hot water supply system, and control method and program thereof**

(30) Priority: 09.03.2012 JP 2012053023
(71) Applicant: MITSUBISHI HEAVY INDUSTRIES, LTD., Tokyo 108-8215 (JP)
(72) Inventor: Maeno, Masashi, TOKYO, 108-8215 (JP); Yoshida, Shigeru, TOKYO, 108-8215 (JP)
(74) Representative: Intès, Didier Gérard André

(57) **Abstract**

There are provided a calculation unit (11) that calculates a first energy consumption amount of a heat pump hot water supply device (2) corresponding to each outgoing hot water temperature of the heat pump hot water supply device (2) when water incoming into the heat pump hot water supply device (2) is heated until an outgoing hot water temperature at an exit of a boiler (3) reaches a requested outgoing hot water temperature, and a second energy consumption amount of the boiler (3) corresponding to each boiler incoming water temperature when water incoming into the boiler (3) is heated until the outgoing hot water temperature at an exit of the boiler (3) reaches the requested outgoing hot water temperature; and an outgoing hot water temperature output unit (12) that estimates an operating point at which a total energy consumption amount, which is a sum of the first energy consumption amount and the second energy consumption amount, becomes minimum, sets the heat pump outgoing hot water temperature at the operating point as a target temperature, and outputs the target temperature to the heat pump hot water supply device (2) as the heat pump outgoing hot water temperature.

## Description

### {Technical Field}

The present invention relates to a heat pump hot water supply system, and a control method and a program thereof.

### {Background Art}

Conventionally, the mainstream of water heaters and space heaters is oil or gas fired, but from the growing interest in environmental problems in recent years, attention has been paid to transition to electric heat pumps with low emissions of CO₂ (carbon dioxide) for preventing global warming. In particular, in comparison with conventional firing boilers, the heat pump hot water supply device using a CO₂ refrigerant can greatly reduce CO₂, can obtain a higher outgoing hot water temperature in terms of the refrigerant performance, can reduce running costs, and thus has already been widely used for home use.

For example, Patent Literature 1 listed below discloses a technique in which a heat pump hot water supply device is connected in series with a heating boiler; and when an outgoing hot water temperature of water heated by the heat pump is less than a predetermined temperature (55°C), the water is heated by the heating boiler to increase the temperature.
In addition, Patent Literature 2 listed below discloses a technique that includes a standard temperature hot water system configured to includes an internal combustion engine fueled by a city gas and a heat pump using the internal combustion engine as a drive source thereof, and an auxiliary boiler, wherein the heat pump is used by reducing the condensation temperature thereof and a desired hot water temperature is obtained by operating the auxiliary boiler.

### {Citation List}

### {Patent Literature}

{PTL 1} the Publication of Japanese Patent No. 4437987
{PTL 2} Japanese Unexamined Patent Application, Publication No. Sho 60-89651

### {Summary of Invention}

### {Technical Problem}

Unfortunately, the method disclosed in PTL 1 listed above, in which the supplied water is always heated to a predetermined temperature by the heat pump hot water supply device to increase the temperature, has a problem that the heat pump hot water supply device is not in a highly efficient state as a whole since the performance of the heat pump hot water supply device is different depending on an operating environment such as an incoming water temperature into the heat pump hot water supply device, an outgoing hot water temperature from the heat pump hot water supply device, and an outside air temperature.

In view of such circumstances, the present invention has been made, and an object of the present invention is to provide a heat pump hot water supply system that can be operated at a high efficiency when the heat pump hot water supply device is operated in combination with a boiler, as well as a control method and a program thereof.

### {Solution to Problem}

In order to solve the above problem, the present invention adopts the following solutions.
The present invention provides a heat pump hot water supply system that includes a heat pump hot water supply device and a boiler, the heat pump hot water supply device using carbon dioxide as a refrigerant, the boiler provided on a downstream side of the heat pump hot water supply device, the heat pump hot water supply system including calculating means that calculates a first energy consumption amount and a second energy consumption amount, the first energy consumption amount being an amount of energy consumed by the heat pump hot water supply device corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and outgoing hot water temperature output means that estimates an operating point at which a total energy consumption amount, which is a sum of the first energy consumption amount and the second energy consumption amount, becomes minimum, sets the heat pump outgoing hot water temperature at the minimum operating point as a target temperature, and outputs the target temperature to the heat pump hot water supply device as the heat pump outgoing hot water temperature.

According to such a configuration, water incoming into the heat pump hot water supply device is heated with carbon dioxide as a refrigerant, is outputted to a downstream side on which a boiler is provided, and is heated by the boiler to a requested outgoing hot water temperature. A first energy consumption amount, which is an amount of energy consumed by the heat pump hot water supply device corresponding to each outgoing hot water temperature of the heat pump hot water supply device when the water incoming into the heat pump hot water supply device is heated by the heat pump hot water supply device until the outgoing hot water temperature at an exit of the boiler reaches a requested outgoing hot water temperature and a second energy consumption amount, which is an amount of energy consumed by the boiler corresponding to each incoming water temperature of the boiler when water incoming into the boiler is heated by the boiler until the outgoing hot water temperature at an exit of the boiler reaches a requested outgoing hot water temperature are calculated; and a heat pump outgoing hot water temperature at an operating point at which a total energy consumption amount, which is a sum of the first energy consumption amount and the second energy consumption amount, becomes minimum is outputted to the heat pump hot water supply device as a target temperature of the outgoing hot water temperature of the heat pump hot water supply device.

In this manner, the amount of power consumed by the heat pump hot water supply device is converted into the amount of heat so that the unit thereof is the same as that of the boiler; thereby the energy consumption amounts can be compared when the heat pump hot water supply device and the boiler are used; and the operating point at which the energy consumption amount becomes minimum when the heat pump hot water supply device is used in combination with the boiler can be easily estimated. In addition, the boiler and the heat pump have different energies directly used and thus the energy consumption amount of the first energy consumption amount and the second energy consumption amount is compared by converting the energy into a primary energy.

The calculating means of the heat pump hot water supply system may calculate the second energy consumption amount with respect to the boiler incoming water temperature ranging from a heat pump incoming water temperature, which is the temperature of water incoming into the heat pump, to the requested outgoing hot water temperature.

This makes it possible to easily calculate the second energy consumption amount in a case where the water incoming into the heat pump hot water supply device is heated only by the boiler, or in another case where the water is heated only by the heat pump hot water supply device, or in other in-between cases.

The heat pump hot water supply system may include an operating characteristic indicating the performance of the heat pump hot water supply device determined based on an outside air temperature and a heat pump incoming water temperature which is the temperature of water incoming into the heat pump; a first detection means that detects the outside air temperature; and a second detection means that detects the heat pump incoming water temperature, wherein the calculating means may calculate the first energy consumption amount based on the operating characteristic, and the detected outside air temperature and the detected heat pump incoming water temperature.

In this manner, the performance of the heat pump hot water supply device determined based on the outside air temperature and the heat pump incoming water temperature is stored as the operating characteristic, and thus the first energy consumption amount corresponding to each outgoing hot water temperature from the heat pump can be easily calculated based on the outside air temperature and the heat pump incoming water temperature detected.

In the heat pump hot water supply system, the calculating means may calculate a first operating cost, which is an operating cost when the heat pump hot water supply device is used, based on the first energy consumption amount and a first fuel unit cost data, which is a unit cost of the fuel used when heating is performed by the heat pump hot water supply device, and may calculate a second operating cost, which is an operating cost when the boiler is used, based on the second energy consumption amount and a second fuel unit cost data, which is a unit cost of the fuel used when heating is performed by the boiler; and the outgoing hot water temperature output means may estimate an operating point at which a total operating cost, which is a sum of the first operating cost and the second operating cost, becomes minimum, may set the heat pump outgoing hot water temperature at the operating point at which the total operating cost becomes minimum, as a target temperature, and may output the target temperature to the heat pump hot water supply device as the heat pump outgoing hot water temperature.

This makes it possible to easily estimate an operating condition to minimize the operating cost, leading to reduction in operating cost by operating in the operating condition.

In the heat pump hot water supply system, the calculating means may calculate a first emission amount, which is a carbon dioxide emission amount when the heat pump hot water supply device is used, based on the first energy consumption amount and a first emission amount unit data, which is emission amount unit data of carbon dioxide emitted from a fuel used when heating is performed by the heat pump hot water supply device, and may calculate a second emission amount, which is a carbon dioxide emission amount when the boiler is used, based on the second energy consumption amount and a second emission amount unit data, which is emission amount unit data of carbon dioxide emitted from a fuel used when heating is performed by the boiler; and the outgoing hot water temperature output means may estimate an operating point at which a total emission amount, which is a sum of the first emission amount and the second emission amount, becomes minimum, may set the heat pump outgoing hot water temperature at the operating point at which the total emission amount becomes minimum, as a target temperature, and may output the target temperature to the heat pump hot water supply device as the heat pump outgoing hot water temperature.

This makes it possible to easily estimate an operating condition to minimize the carbon dioxide emission amount, and suppress the carbon dioxide emission amount by operating in the operating condition.

The outgoing hot water temperature output means of the heat pump hot water supply system may be such that the calculating means calculates the first energy consumption amount and the second energy consumption amount each time the heat pump hot water supply device is activated; and the outgoing hot water temperature output means estimates the minimum operating point.

This makes it possible to accurately estimate the operating point at which the total energy consumption amount becomes minimum at a time when the heat pump hot water supply device is activated even though the outside air temperature, the heat pump incoming water temperature, the requested set temperature, and other temperatures are changed from those set by the previous activation of the heat pump hot water supply device.

In the heat pump hot water supply system, when the setting of the requested outgoing hot water temperature of the boiler is changed during operation of the heat pump hot water supply device, the outgoing hot water temperature output means may estimate the operating point at which the total energy consumption amount becomes minimum.

Even when the setting of the requested outgoing hot water temperature of the boiler is changed, the operating point at which the total energy consumption amount becomes minimum can be accurately estimated.

In the heat pump hot water supply system, in a case where the second energy consumption amount is equal to or less than a predetermined percentage of an output capacity of the boiler, it is preferable to reduce the efficiency of the boiler in comparison with a case in which the second energy consumption amount is greater than the predetermined percentage.

Thus, in a case where the energy consumption amount of the boiler is equal to or less than the predetermined percentage of the output capacity of the boiler, the boiler efficiency can be reduced and the load on the boiler can be reduced.

In the heat pump hot water supply system, when a water supply load increases transiently and the temperature of water outgoing from the heat pump hot water supply device is not increased to a desired temperature, the boiler may heat the water incoming into the boiler regardless of the heat pump incoming water temperature.

When a water supply load increases transiently, but the heat pump incoming water temperature of the heat pump hot water supply device is not increased to a predetermined temperature because of insufficient output capacity of the heat pump hot water supply device, the boiler performs an assist operation (heating assist operation).

The present invention provides a control method of a heat pump hot water supply system that includes a heat pump hot water supply device and a boiler, the heat pump hot water supply device using carbon dioxide as a refrigerant, the boiler provided on a downstream side of the heat pump hot water supply device, the control method of the heat pump hot water supply system including: a first process of calculating a first energy consumption amount and a second energy consumption amount, the first energy consumption amount being an amount of energy consumed by the heat pump hot water supply device corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and a second process of estimating an operating point at which a total energy consumption amount, which is a sum of the first energy consumption amount and the second energy consumption amount, becomes minimum, setting the heat pump outgoing hot water temperature at the minimum operating point as a target temperature, and outputting the target temperature to the heat pump hot water supply device as the heat pump outgoing hot water temperature.

The present invention provides a control program of a heat pump hot water supply system that includes a heat pump hot water supply device and a boiler, the heat pump hot water supply device using carbon dioxide as a refrigerant, the boiler provided on a downstream side of the heat pump hot water supply device, the control program of the heat pump hot water supply system being for causing a computer to execute: a first process of calculating a first energy consumption amount and a second energy consumption amount, the first energy consumption amount being an amount of energy consumed by the heat pump hot water supply device corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and a second process of estimating an operating point at which a total energy consumption amount, which is a sum of the first energy consumption amount and the second energy consumption amount, becomes minimum, setting the heat pump outgoing hot water temperature at the minimum operating point as a target temperature, and outputting the target temperature to the heat pump hot water supply device as the heat pump outgoing hot water temperature.

### {Advantageous Effects of Invention}

The present invention can exert an effect of enabling an operation at a high efficiency according to an operating environment when the heat pump hot water supply device is used in combination with the boiler.

### {Brief Description of Drawings}

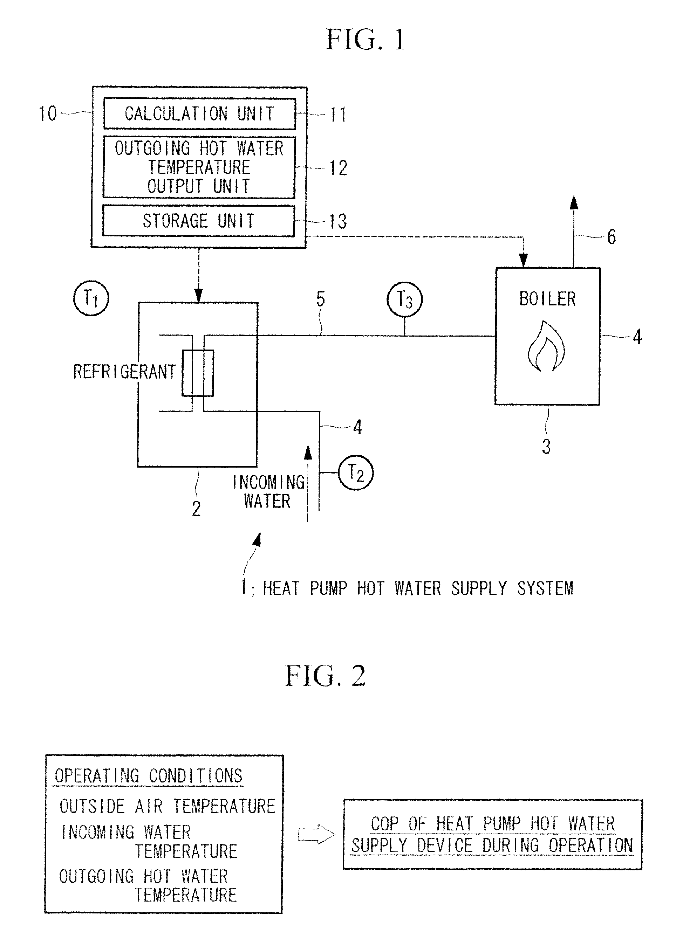

{Fig. 1}
   Fig. 1 is a schematic configuration view illustrating a heat pump hot water supply system according to a first embodiment of the present invention.
{Fig. 2}
   Fig. 2 illustrates that the Coefficient of Performance (COP) at a time of operation of the heat pump hot water supply device is determined by an outside air temperature, an incoming water temperature, and an outgoing hot water temperature.
{Fig. 3}
   Fig. 3 illustrates an example of a relation between the outside air temperature and the Coefficient of Performance (COP) of the heat pump hot water supply device with respect to a predetermined incoming water temperature as operating characteristics of the heat pump hot water supply device.
{Fig. 4}
   Fig. 4 illustrates an example of a relation between the efficiency and the load factor of a common boiler.
{Fig. 5}
   Fig. 5 is an operation flow describing a control method of the heat pump hot water supply system.
{Fig. 6}
   Fig. 6 illustrates an example of comparing energy consumption amounts of the heat pump hot water supply device and the boiler.
{Fig. 7}
   Fig. 7 is a schematic configuration view illustrating a heat pump hot water supply system according to a second embodiment of the present invention.
{Fig. 8}
   Fig. 8 is a schematic configuration view illustrating a heat pump hot water supply system according to a third embodiment of the present invention.

### {Description of Embodiments}

### [First embodiment]

Hereinafter, embodiments of a heat pump hot water supply system according to the present invention as well as a control method and a program thereof will be described with reference to the accompanying drawings.
Fig. 1 is a schematic configuration view illustrating a heat pump hot water supply system 1 according to a first embodiment of the present invention. As illustrated in Fig. 1, the heat pump hot water supply system 1 includes a heat pump hot water supply device 2, a boiler 3, a first temperature measuring device (a first detection means) T1, a second temperature measuring device (a second detection means) T2, a third temperature measuring device T3, and a control device 10.

The heat pump hot water supply device 2 is an electric heat pump that uses carbon dioxide as a refrigerant and heats water using atmospheric heat. The heat pump hot water supply device 2 is connected to a water supply pipe 4 that guides supplied water and a water guide pipe 5 that supplies water to the side of the boiler 3 so as to heat the water supplied from the water supply pipe 4 and discharge the heated water to the pipe 5.
The boiler 3 is connected to the water guide pipe 5 that guides the water supplied from the side of the heat pump hot water supply device 2 and a hot water supply pipe 6 that discharges hot water so as to heat the water supplied from the pipe 5 and guide the heated hot water (for example, about 60 to 70°C) to the hot water supply pipe 6.

The first temperature measuring device T1 is provided near the heat pump hot water supply device 2 so as to measure an outside air temperature (hereinafter also referred to as an "outside temperature") near the heat pump hot water supply device 2 and output the measured outside temperature information to the control device 10. Here, "near the heat pump hot water supply device 2" may refer to any position that is preferable to estimate the operating characteristics of the heat pump hot water supply device 2.
The second temperature measuring device T2 is provided on the water supply pipe 4 so as to measure the temperature of the water supplied to the heat pump hot water supply device 2 and output the measured heat pump incoming water temperature information to the control device 10.

The third temperature measuring device T3 is provided on the pipe 5 to output boiler incoming water temperature information, which is a result of measuring the temperature of the water that flows through the pipe 5 and is supplied to the boiler 3, to the control device 10. In the case like the present embodiment, in which a hot water storage tank (tank) is not provided in the heat pump hot water supply system 1 and the heat pump hot water supply device 2 is directly connected to the boiler 3 through the pipe 5, the third temperature measuring device T3 measures the heat pump outgoing hot water temperature, which is a temperature of water heated by the heat pump hot water supply device 2, as the boiler incoming water temperature.

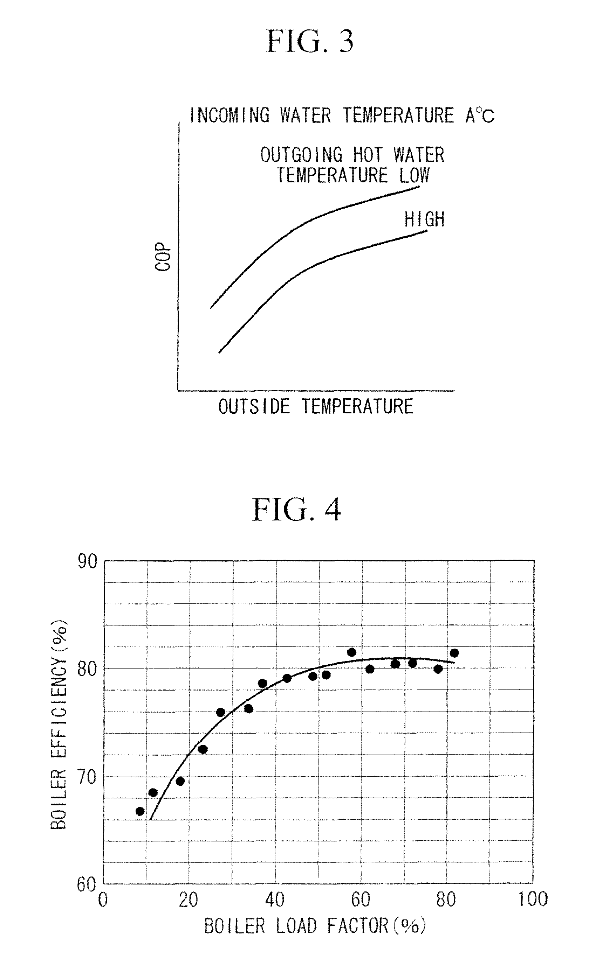

The control device 10 includes a calculation unit (calculating means) 11, an outgoing hot water temperature output unit (outgoing hot water temperature output means) 12, and a storage unit 13.
The storage unit 13 stores information such as the performance of the heat pump hot water supply device 2 determined based on the outside air temperature and the heat pump incoming water temperature and the operating characteristics of the heat pump hot water supply device 2 including the unit cost of electricity used by the heat pump hot water supply device 2. The operating characteristics of the heat pump hot water supply device 2 such as COP (Coefficient Of Performance, performance coefficient) of the heat pump hot water supply device 2 as illustrated in Fig. 2 are determined by an outside air temperature, an incoming water temperature, and an outgoing hot water temperature during operation. Fig. 3 illustrates the COP of the heat pump hot water supply device 2 to the outside air temperature for each heat pump outgoing hot water temperature in a case of a predetermined heat pump incoming water temperature. Note that the information about the operating characteristics of the heat pump hot water supply device 2 may be preliminarily stored in the storage unit 13 or may be inputted by the user and stored in the storage unit 13.

In addition, the storage unit 13 stores boiler basic information such as the efficiency and the fuel unit cost of the boiler 3. Note that the efficiency of the boiler 3 includes an ordinary boiler efficiency in a case where the energy consumption amount of the boiler 3 to the output capacity thereof is greater than a predetermined percentage (for example, 50%) and a reduced boiler efficiency that is used when the energy consumption amount is equal to or less than a predetermined percentage (for example, 50%).
In the present embodiment, the efficiency of the boiler 3 is described assuming a case where it is specified by the user each time the heat pump hot water supply device 2 is activated, but the method of specifying the efficiency of the boiler 3 is not limited to this. For example, as illustrated in Fig. 4, there may be provided a table associating a boiler load factor (%) and a boiler efficiency (%) such that the energy consumption amount (second energy consumption amount) of the boiler 3 to a rated output capacity thereof is calculated as a load factor and the boiler efficiency corresponding to the load factor of the boiler is read as needed.

The calculation unit 11 calculates: a first energy consumption amount (thermal conversion) which is an amount of energy consumed by the heat pump hot water supply device 2 corresponding to each outgoing hot water temperature of the heat pump hot water supply device 2 in a case where water incoming into the heat pump hot water supply device 2 is heated until the outgoing hot water temperature at an exit of the boiler 3 reaches a requested outgoing hot water temperature; and a second energy consumption amount (thermal conversion) which is an amount of energy consumed by the boiler 3 corresponding to each boiler incoming water temperature in a case where water incoming into the boiler 3 is heated until the outgoing hot water temperature at an exit of the boiler 3 reaches the requested outgoing hot water temperature.

Specifically, the calculation unit 11 calculates the second energy consumption amount with respect to the boiler incoming water temperature ranging from the heat pump incoming water temperature, which is a temperature of the water incoming into the heat pump, to the requested outgoing hot water temperature.
In addition, the calculation unit 11 calculates the first energy consumption amount based on the operating characteristics, as well as the outside air temperature and the heat pump incoming water temperature detected.
The outgoing hot water temperature output unit 12 estimates an operating point at which a total energy consumption amount, which is a sum of the first energy consumption amount and the second energy consumption amount, becomes minimum, sets the heat pump outgoing hot water temperature at the minimum operating point as a target temperature, and outputs the target temperature to the heat pump hot water supply device 2 as the heat pump outgoing hot water temperature.

Note that it is preferable that each time the heat pump hot water supply device 2 is activated, the calculation unit 11 calculates the first energy consumption amount and the second energy consumption amount; and the outgoing hot water temperature output unit 12 estimates the operating point at which the total energy consumption amount becomes minimum.
In addition, it is preferable that when the setting of the requested outgoing hot water temperature of the boiler 3 is changed during operation of the heat pump hot water supply device, the outgoing hot water temperature output unit 12 estimates the operating point at which the total energy consumption amount becomes minimum. This makes it possible to accurately determine the operating point at which the total energy consumption amount becomes minimum even if the operating environment is changed.

Note that when the water supply load increases transiently, causing insufficient output capacity of the heat pump hot water supply device 2 and resulting in that it is estimated that the water outgoing from the heat pump hot water supply device 2 is not increased to a desired temperature (requested outgoing hot water temperature), the boiler 3 may be caused to heat the incoming water to perform an assist operation regardless of the heat pump outgoing hot water temperature (boiler incoming water temperature). In this case, the control device 10 outputs a heat command to the side of the boiler 3, causing the incoming water to be heated.

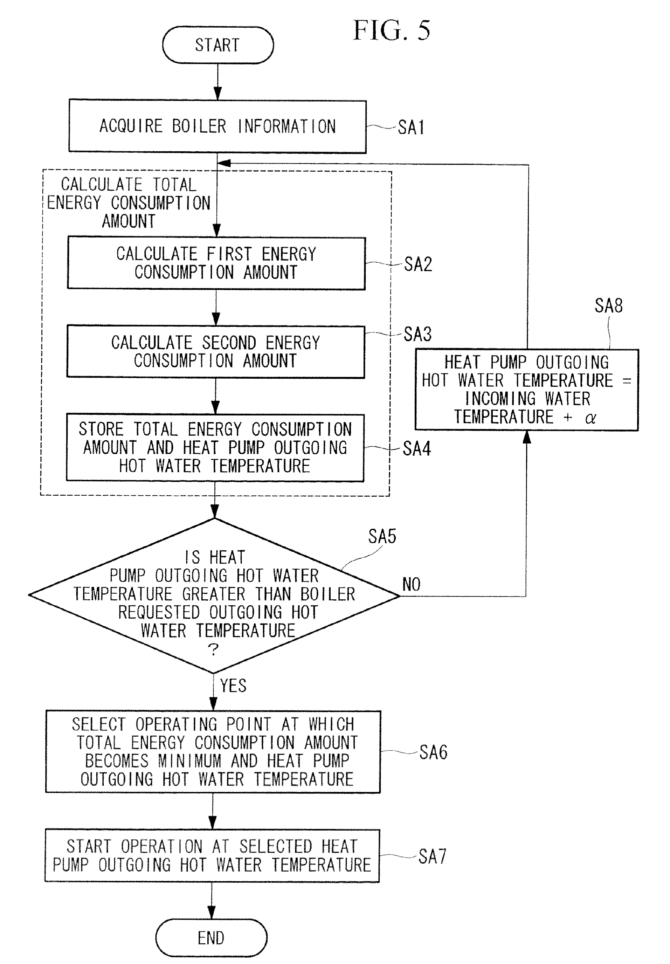

Hereinafter, the control method of the heat pump hot water supply system 1 according to the present embodiment will be described.
The information about the operating characteristics of the heat pump hot water supply device 2 is preliminarily stored in the storage unit 13. When the user inputs boiler basic information about the boiler 3 such as a requested outgoing hot water temperature which is a targeted boiler outgoing hot water temperature, a type of a fuel used by the boiler 3, and a boiler efficiency, the control device 10 acquires information about the requested outgoing hot water temperature, the fuel type, the boiler efficiency of the boiler 3 and stores the information in the storage unit 13 (step SA1 in Fig. 5).

The outside air temperature measured by the first temperature measuring device T1 is inputted to the control device 10 as outside air temperature information, and the heat pump incoming water temperature measured by the second temperature measuring device T2 is inputted to the control device 10 as heat pump incoming water temperature information. The control device 10 calculates the first energy consumption amount based on the acquired outside air temperature information and heat pump incoming water temperature information, and the operating characteristics of the heat pump hot water supply device 2 read from the storage unit 13 (step SA2 in Fig. 5). For example, when the first energy consumption amount is calculated for the first time, the first energy consumption amount is calculated assuming a case where the heat pump hot water supply device 2 does not perform heating.

In addition, the control device 10 calculates the second energy consumption amount of the boiler 3 in a case where water supplied to the boiler 3 is heated until the outgoing hot water temperature of the water discharged from the hot water supply pipe 6 on an exit side of the boiler 3 reaches the requested outgoing hot water temperature (step SA3 in Fig. 5). Here, the water supplied to the boiler 3 is water outgoing from the heat pump hot water supply device 2 and thus the boiler incoming water temperature is the heat pump outgoing hot water temperature. For example, when the second energy consumption amount is calculated for the first time, the second energy consumption amount is calculated assuming a case where the water that is not heated by the heat pump hot water supply device 2, that is the water of the heat pump incoming water temperature is heated only by the boiler 3.

The information such as the calculated first energy consumption amount, second energy consumption amount, and total energy consumption amount, as well as the heat pump outgoing hot water temperature resulting in the calculation results (for example, the heat pump incoming water temperature for the first calculation) is associated with each other and is stored in the storage unit 13 as associated information (step SA4 in Fig. 5). A determination is made as to whether or not the heat pump outgoing hot water temperature used to calculate the energy consumption amount is greater than the requested outgoing hot water temperature which is a target temperature at an exit of the boiler 3 (step SA5 in Fig. 5). If the heat pump outgoing hot water temperature is less than the requested outgoing hot water temperature, the heat pump outgoing hot water temperature is increased to a predetermined temperature (for example, α°C) (step SA8 in Fig. 5). Then, control returns to step SA2, where the calculation of the first energy consumption amount and the second energy consumption amount is repeated.

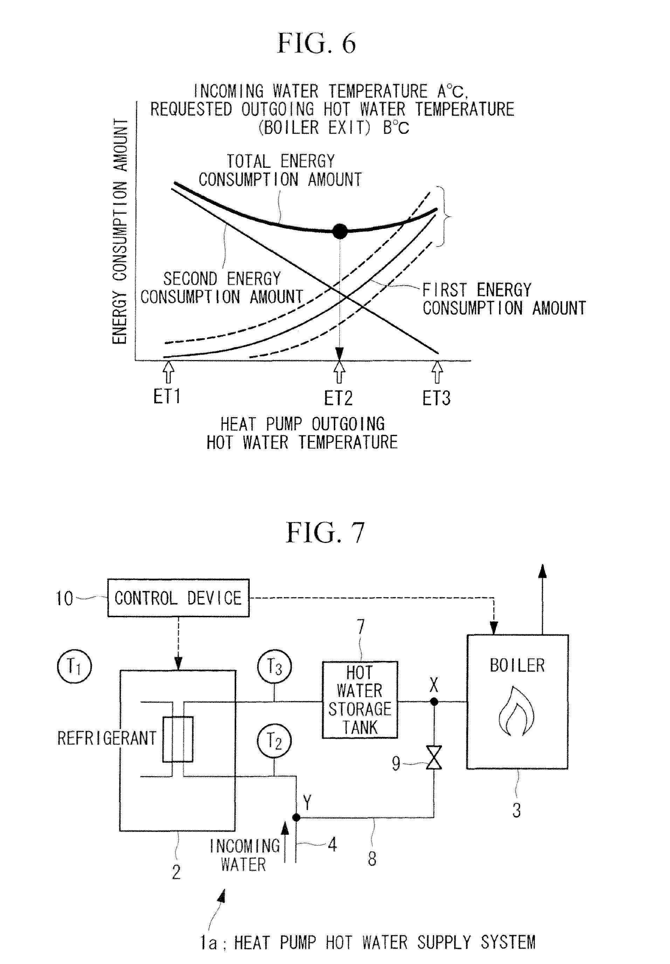

Fig. 6 illustrates an example of the associated information, in which the first energy consumption amount for each heat pump outgoing hot water temperature, the second energy consumption amount, and the total energy consumption amount for a case of heat pump incoming water temperature A°C and boiler outgoing hot water temperature B°C are associated with each other. As illustrated in Fig. 6, the associated information indicates the first energy consumption amount and the second energy consumption amount for each heat pump outgoing hot water temperature in a case where water supplied to the heat pump is heated only by the boiler 3 (heat pump outgoing hot water temperature = ET1), in another case where water is not heated by the boiler 3, but heated only by the heat pump hot water supply device 2 (heat pump outgoing hot water temperature = ET3), and in other in-between cases where water is heated by a combination of the heat pump hot water supply device 2 and the boiler 3 (heat pump outgoing hot water temperature = ET1 to ET3).

Note that if the calculated second energy consumption amount is equal to or less than a predetermined percentage (for example, 50%) to the output capacity of the boiler, the boiler efficiency is reduced as illustrated in Fig. 4. Thus, it is preferable to evaluate by adding a reduced boiler efficiency (for example, 80%) for reducing the efficiency of the boiler 3 than the predetermined percentage.
When the heat pump outgoing hot water temperature is greater than the requested outgoing hot water temperature, the associated information stored in the storage unit 13 is referred to (for example, Fig. 6), the operating point at which the total energy consumption amount becomes minimum is estimated, and the outgoing hot water temperature (for example, ET2) of the heat pump hot water supply device 2 at an operating point, at which the total energy consumption amount becomes minimum, is read (step SA6 in Fig. 5).
The read outgoing hot water temperature of the heat pump hot water supply device 2 is set as the target temperature of the heat pump hot water supply device 2, and the target temperature information is outputted from the control device 10 to the heat pump hot water supply device 2 (step SA7 in Fig. 5). Then, the process ends.

When the target temperature information is acquired, the heat pump hot water supply device 2 sets the target temperature as the heat pump outgoing hot water temperature, heats the supplied water to the target temperature, and discharges the heated water to the side of the boiler 3. The water discharged from the heat pump hot water supply device 2 is supplied to the boiler 3. The boiler 3 heats the water until the heat pump outgoing hot water temperature reaches the requested outgoing hot water temperature, and then discharges the heated water.

The heat pump hot water supply system 1 according to the present embodiment described above may be configured to process all or a part of the above processes using separate software. In this case, the control device 10 includes a CPU, a main storage unit such as a RAM, and a computer-readable recording medium containing a program for implementing all or a part of the above processes. The CPU reads the program stored in the recording medium to execute information processing and calculating process, thereby implementing the same process as that of the above described control device 10.
Here, the computer-readable recording medium refers to a magnetic disk, a magnet-optical disk, a CD-ROM, a DVD-ROM, a semiconductor memory, and other media. The computer program may be delivered to the computer by a communication line and the computer that receives the delivery may execute the program.

As described above, according to the heat pump hot water supply system 1, the control method, and the control program according to the present embodiment, water supplied to the heat pump hot water supply device 2 is heated with carbon dioxide as a refrigerant, is outputted to a downstream side of the boiler 3, and is heated to the requested outgoing hot water temperature by the boiler 3. The first energy consumption amount which is an amount of energy consumed by the heat pump hot water supply device 2 corresponding to each outgoing hot water temperature of the heat pump hot water supply device in a case where water incoming into the heat pump hot water supply device 2 is heated by the heat pump hot water supply device 2 until the outgoing hot water temperature at an exit of the boiler 3 reaches the requested outgoing hot water temperature and the second energy consumption amount which is an amount of energy consumed by the boiler 3 corresponding to each incoming water temperature of the boiler 3 in a case where water incoming into the boiler 3 is heated by the boiler 3 until the outgoing hot water temperature at an exit of the boiler 3 reaches the requested outgoing hot water temperature are calculated; and the heat pump outgoing hot water temperature at an operating point at which a total energy consumption amount, which is a sum of the first energy consumption amount and the second energy consumption amount, becomes minimum is outputted to the heat pump hot water supply device 2 as a target temperature of the outgoing hot water temperature of the heat pump hot water supply device 2.

In this manner, power consumed by the heat pump hot water supply device 2 is converted into heat so as to have the same unit as that of the boiler 3, which makes it possible to compare the energy consumption amounts when the heat pump hot water supply device 2 is used in combination with the boiler 3 and easily estimate the operating point at which the energy consumption amount becomes minimum when the heat pump hot water supply device is used in combination with the boiler. In addition, the operating point at which the total energy consumption amount becomes minimum is calculated and the heat pump hot water supply device 2 is operated in combination with the boiler 3 at the operating point at which the total energy consumption amount becomes minimum, which makes it possible to minimize the total energy consumption amount of the entire heat pump hot water supply system 1 and operate at a high efficiency.

### [Modified example 1]

Note that in the present embodiment, as illustrated in Fig. 6, the description is given assuming that the heat pump hot water supply device 2 is compared with the boiler 3 by converting the energy consumption amount into the thermal amount (primary energy), but the comparison method is not limited to this. For example, the energy consumption amount may be converted into the fuel cost for comparison. In this case, in addition to the above configuration, the storage unit 13, the calculation unit 11, and the outgoing hot water temperature output unit 12 each provide the following.
The storage unit 13 stores first fuel unit cost data, which is a unit cost of the fuel used when heating is performed by the heat pump hot water supply device 2; and second fuel unit cost data, which is a unit cost of the fuel used when heating is performed by the boiler 3.

The calculation unit 11 calculates a first operating cost, which is an operating cost when the heat pump hot water supply device 2 is used, based on the first fuel unit cost data and the first energy consumption amount; and calculates a second operating cost, which is an operating cost when the boiler 3 is used, based on the second fusel unit cost data and the second energy consumption amount. Specifically, the calculation unit 11 calculates the first operating cost based on the first fuel unit cost data and a necessary fuel amount estimated from the energy consumption amount of the heat pump hot water supply device 2; and calculates the second operating cost based on the second fuel unit cost data and a necessary fuel amount estimated from the energy consumption amount of the boiler 3.

The outgoing hot water temperature output unit 12 estimates an operating point at which a total operating cost, which is a sum of the first operating cost and the second operating cost, becomes minimum; sets the heat pump outgoing hot water temperature at the operating point at which the total operating cost becomes minimum, as a target temperature; and outputs the target temperature to the heat pump hot water supply device 2 as the heat pump outgoing hot water temperature.
This makes it possible to easily estimate the operating point (operating condition) where the operating cost (operation cost) becomes minimum, leading to reduction in operating cost by operating in the operating condition.

### [Modified example 2]

Alternatively, the energy consumption amount may be converted into the discharged carbon dioxide amount for comparison. In this case, in addition to the above configuration, the storage unit 13, the calculation unit 11, and the outgoing hot water temperature output unit 12 each provide the following.
The storage unit 13 stores first emission amount unit data, which is emission amount unit data of CO₂ discharged by the fuel used when heating is performed by the heat pump hot water supply device 2; and second emission amount unit data, which is emission amount unit data of CO₂ discharged by the fuel used when heating is performed by the boiler 3.
The calculation unit 11 calculates a first emission amount, which is a CO₂ emission amount when the heat pump hot water supply device 2 is used, based on the first emission amount unit data and the first energy consumption amount; and calculates the second emission amount, which is a CO₂ emission amount when the boiler 3 is used, based on the second emission amount unit data and the second energy consumption amount.

The outgoing hot water temperature output unit 12 estimates the operating point at which the total emission amount, which is a sum of the first emission amount and the second emission amount, becomes minimum; sets the heat pump outgoing hot water temperature at the operating point at which the total emission amount becomes minimum, as a target temperature; and outputs the target temperature to the heat pump hot water supply device 2 as the heat pump outgoing hot water temperature.
This makes it possible to easily estimate the operating point (operating condition) where the CO₂ emission amount becomes minimum and suppress the CO₂ emission amount by operating in the operating condition.

### [Second embodiment]

Hereinafter, a second embodiment of the present invention will be described. The present embodiment is different from the first embodiment in that a heat pump hot water supply system 1a includes a hot water storage tank 7 and a bypass path 8 that bypasses water from the water supply pipe 4 supplying water to the heat pump hot water supply device 2, to the side of the boiler 3. Regarding the heat pump hot water supply system 1a of the present embodiment, a description of commonalities with the first embodiment will be omitted and the differences will be mainly described.

As illustrated in Fig. 7, the heat pump hot water supply system 1a includes a hot water storage tank 7, a bypass path 8 that bypasses water from the water supply pipe 4 supplying water to the heat pump hot water supply device 2 to the side of the boiler 3, and a valve 9 provided on the bypass path 8.
The hot water storage tank 7 is connected to between the heat pump hot water supply device 2 and the boiler 3, stores water outgoing from the heat pump hot water supply device 2, and discharges the water to the side of the boiler 3 when a water supply request is received from the side of the boiler 3. The heat pump hot water supply device 2 does not necessarily have the same capacity as the boiler 3. Usually, the heat pump hot water supply device 2 has a small capacity, temporarily stores water in the hot water storage tank 7 by lengthening the operating time, and supplies water to the side of the boiler 3 in response to a water supply request. The hot water storage tank 7 is heat-insulated and is controlled so as to keep the stored water at a predetermined temperature.
The bypass path 8 circulates water to the side of the boiler 3 at a flow rate according to the opening degree of the valve 9.

The second temperature measuring device T2 is provided at a position closer to a heat exchanger on a downstream side of the heat pump hot water supply device 2 than a junction point Y between the water supply pipe 4 and the bypass path 8, measures the temperature of the water supplied to the heat pump hot water supply device 2, and outputs the heat pump incoming water temperature information to the control device 10.
The third temperature measuring device T3 is connected to between the heat pump hot water supply device 2 and the hot water storage tank 7, measures the temperature of the water outgoing from the heat pump hot water supply device 2, and outputs the heat pump outgoing hot water temperature information to the control device 10.

Such a configuration makes it possible to store and operate a predetermined amount of water outgoing from the heat pump hot water supply device 2. Alternatively, in a case where it is estimated that a water supply load increases temporarily, causing an insufficient amount of water stored in the hot water storage tank 7 with respect to a requested amount of water, which is an amount of water requested by the user, the configuration may be such that if heating by the heat pump hot water supply device 2 is insufficient, the opening degree of the valve 9 is adjusted to open, regardless of the heat pump outgoing hot water temperature of the water supplied from the hot water storage tank 7, heating is performed by the boiler 3, an assist operation is performed by the boiler 3 so as to operate the entire system of the heat pump hot water supply device 2 and the boiler 3.

### [Third embodiment]

Hereinafter, a third embodiment of the present invention will be described. The present embodiment is different from the first embodiment and the second embodiment in that in the heat pump hot water supply system 1b, the water supply side and the hot water outgoing side of the heat pump hot water supply device 2 are connected to the hot water storage tank 7, and the boiler 3 is connected to water supply from the hot water storage tank 7 and the water supply pipe 4. Regarding the heat pump hot water supply system 1b of the present embodiment, a description of commonalities with the first embodiment and the second embodiment will be omitted and the differences will be mainly described.

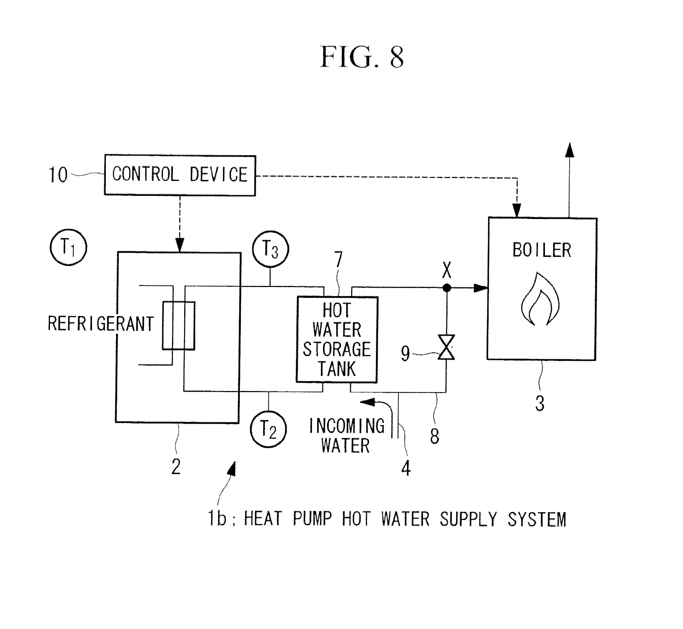

As illustrated in Fig. 8, the water supply side and the hot water outgoing side of the heat pump hot water supply device 2 are connected to the hot water storage tank 7, and the boiler 3 is connected to water supply and the water supply pipe 4 from the hot water storage tank 7.
The hot water storage tank 7 stores water supplied from the water supply pipe 4, supplies the water to the heat pump hot water supply device 2, and stores hot water outgoing from the heat pump hot water supply device 2. In addition, the hot water storage tank 7 supplies water to the boiler 3.
The boiler 3 receives water from the hot water storage tank 7. When the water supply request from the user is temporarily increased and the amount of water stored in the hot water storage tank 7 is not sufficient to respond to the water supply request, the opening degree of the valve 9 is adjusted to directly supply water from the water supply pipe 4.

The second temperature measuring device T2 is provided on a path at a water supply side between the hot water storage tank 7 and the heat pump hot water supply device 2 to measure the temperature of the water supplied to the heat pump hot water supply device 2 and output the heat pump incoming water temperature information to the control device 10.
The third temperature measuring device T3 is provided on a path at a hot water outgoing side between the hot water storage tank 7 and the heat pump hot water supply device 2 to measure the temperature of the water outgoing from the heat pump hot water supply device 2 and output the heat pump outgoing hot water temperature information to the control device 10.

Such a configuration makes it possible to store and operate a predetermined amount of water outgoing from the heat pump hot water supply device 2. Alternatively, in a case where a water supply load increases temporarily and the amount of water stored in the hot water storage tank 7 is less than a requested amount of water, which is an amount of water requested by the user, the configuration may be such that the opening degree of the valve 9 is adjusted to open, regardless of the outgoing hot water temperature of the water supplied from the water supply pipe 4, heating is performed by the boiler 3 and an assist operation is performed by the boiler 3.

### {Reference Signs List}

- 1, 1a, 1b: heat pump hot water supply system
- 2: heat pump hot water supply device
- 3: boiler
- 7: hot water storage tank
- 8: bypass path
- 9: valve
- 10: control device
- T1: first temperature measuring device (first detection means)
- T2: second temperature measuring device (second detection means)
- T3: third temperature measuring device

## Claims

1. A heat pump hot water supply system (1, 1a, 1b) comprising:
a heat hot water supply device (2) using carbon dioxide as a refrigerant;
a boiler (3) provided on a downstream side of the heat pump hot water supply device;
a calculating means (11) that calculates a first energy consumption amount and a second energy consumption amount, the first energy consumption amount being an amount of energy consumed by the heat pump hot water supply device (2) corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and
an outgoing hot water temperature output means (12) that estimates an operating point at which a total energy consumption amount, which is a sum of the first energy consumption amount and the second energy consumption amount, becomes minimum, sets the heat pump outgoing hot water temperature at the minimum operating point as a target temperature, and outputs the target temperature to the heat hot water supply device as the heat outgoing hot water temperature.

2. The heat pump hot water supply system (1, 1a, 1b) according to claim 1, wherein the calculating means (11) calculates the second energy consumption amount with respect to the boiler incoming water temperature ranging from a heat pump incoming water temperature, which is the temperature of water incoming into the heat pump, to the requested outgoing hot water temperature.

3. The heat pump hot water supply system (1, 1a, 1b) according to any one of claims 1 and 2, comprising:
an operating characteristic indicating a performance of the heat pump hot water supply device (2) determined based on an outside air temperature and a heat pump incoming water temperature which is the temperature of water incoming into the heat pump;
a first detection means (T1) that detects the outside air temperature; and
a second detection means (T2) that detects the heat pump incoming water temperature, wherein
the calculating means (11) calculates the first energy consumption amount based on the operating characteristic, and the detected outside air temperature and the detected heat pump incoming water temperature.

4. The heat pump hot water supply system (1, 1a, 1b) according to any one of claims 1 to 3, wherein
the calculating means (11) calculates a first operating cost, which is an operating cost when the heat pump hot water supply device (2) is used, based on the first energy consumption amount and a first fuel unit cost data, which is a unit cost of the fuel used when heating is performed by the heat pump hot water supply device and calculates a second operating cost, which is an operating cost when the boiler is used, based on the second energy consumption amount and a second fuel unit cost data, which is a unit cost of the fuel used when heating is performed by the boiler; and
the outgoing hot water temperature output means (12) estimates an operating point at which a total operating cost, which is a sum of the first operating cost and the second operating cost, becomes minimum, sets the heat pump outgoing hot water temperature at the operating point at which the total operating cost becomes minimum, as a target temperature, and outputs the target temperature to the heat pump hot water supply device as the heat pump outgoing hot water temperature.

5. The heat pump hot water supply system (1, 1a, 1b) according to any one of claims 1 to 4, wherein
the Calculating means (11) calculates a first emission amount, which is a carbon dioxide emission amount when the heat pump hot water supply device (2) is used, based on the first energy consumption amount and a first emission amount unit data, which is emission amount unit data of carbon dioxide emitted from a fuel used when heating is performed by the heat pump hot water supply device, and calculates a second emission amount, which is a carbon dioxide emission amount when the boiler (3) is used, based on the second energy consumption amount and a second emission amount unit data, which is emission amount unit data of carbon dioxide emitted from a fuel used when heating is performed by the boiler; and
the outgoing hot water temperature output means (12) estimates an operating point at which a total emission amount, which is a sum of the first emission amount and the second emission amount, becomes minimum, sets the heat pump outgoing hot water temperature at the operating point at which the total emission amount becomes minimum, as a target temperature, and outputs the target temperature to the heat pump hot water supply device as the heat pump outgoing hot water temperature.

6. The heat pump hot water supply system (1, 1a, 1b) according to any one of claims 1 to 5, wherein each time the heat pump hot water supply device (2) is activated, the calculating means (11) calculates the first energy consumption amount and the second energy consumption amount; and the outgoing hot water temperature output means (12) estimates the minimum operating point.

7. The heat pump hot water supply system (1, 1a, 1b) according to any one of claims 1 to 6, wherein when the setting of the requested outgoing hot water temperature of the boiler (3) is changed during operation of the heat pump hot water supply device (2), the outgoing hot water temperature output means estimates the operating point at which the total energy consumption amount becomes minimum.

8. The heat pump hot water supply system (1, 1a, 1b) according to any one of claims 1 to 7, wherein in a case where the second energy consumption amount is equal to or less than a predetermined percentage of an output capacity of the boiler (3), the efficiency of the boiler is reduced in comparison with a case in which the second energy consumption amount is greater than the predetermined percentage.

9. The heat pump hot water supply system (1, 1a, 1b) according to any one of claims 1 to 8, wherein when a water supply load increases transiently and the temperature of water outgoing from the heat pump hot water supply device is not increased to a desired temperature, the boiler (3) heats the water incoming into the boiler regardless of the heat pump incoming water temperature.

10. A control method of a heat pump hot water supply system (1, 1a, 1b) that includes a heat pump hot water supply device (2) and a boiler (3), the heat pump hot water supply device using carbon dioxide as a refrigerant, the boiler provided on a downstream side of the heat pump hot water supply device,
the control method of the heat pump hot water supply system comprising:
a first step of calculating a first energy consumption amount and a second energy consumption, amount, the first energy consumption amount being an amount of energy consumed by the heat pump hot water supply device corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and
a second step of estimating an operating point at which a total energy consumption amount, which is a sum of the first energy consumption amount and the second energy consumption amount, becomes minimum, setting the heat pump outgoing hot water temperature at the minimum operating point as a target temperature, and outputting the target temperature to the heat pump hot water supply device as the heat pump outgoing hot water temperature.

11. A control program of a heat pump hot water supply system (1, 1a, 1b) that includes a heat pump hot water supply device (2) and a boiler (3), the heat pump hot water supply device using carbon dioxide as a refrigerant, the boiler provided on a downstream side of the heat pump hot water supply device,
the control program of the heat pump hot water supply system being for causing a computer to execute:
a first process of calculating a first energy consumption amount and a second energy consumption amount, the first energy consumption amount being an amount of energy consumed by the heat pump hot water supply device corresponding to each outgoing hot water temperature of the heat pump hot water supply device when water incoming into the heat pump hot water supply device is heated until an outgoing hot water temperature at an exit of the boiler reaches a requested outgoing hot water temperature, the second energy consumption amount being an amount of energy consumed by the boiler corresponding to each boiler incoming water temperature when water incoming into the boiler is heated until the outgoing hot water temperature at the exit of the boiler reaches the requested outgoing hot water temperature; and
a second process of estimating an operating point at which a total energy consumption amount, which is a sum of the first energy consumption amount and the second energy consumption amount, becomes minimum, setting the heat pump outgoing hot water temperature at the minimum operating point as a target temperature, and outputting the target temperature to the heat pump hot water supply device as the heat pump outgoing hot water temperature.
